# EUROPÄISCHE PATENTSCHRIFT

(11) **EP 3 600 755 B1**
(45) Veröffentlichungstag und Bekanntmachung des Hinweises auf die Patenterteilung: **31.12.2025**
(21) Anmeldenummer: 18713829.2
(22) Anmeldetag: 19.03.2018
(51) Int. Cl.: B23K 26/322, B23K 26/16

(54) **VERFAHREN ZUM STIRNSEITIGEN LASERSCHWEISSEN**
METHOD FOR LASER WELDING END FACES
PROCÉDÉ DE SOUDAGE AU LASER CÔTÉ FRONTAL

(30) Priorität: 20.03.2017 DE 102017105900
(43) Veröffentlichungstag der Anmeldung: 05.02.2020
(73) Patentinhaber: Kirchhoff Automotive Deutschland GmbH, 57439 Attendorn (DE)
(72) Erfinder: STUHRMANN, Jan, 57489 Drolshagen (DE); DAHMEN, Christian, 57462 Olpe (DE)
(74) Vertreter: Haverkamp Patentanwälte PartG mbB
(86) Internationale Anmeldenummer: PCT/EP2018/056833
(87) Internationale Veröffentlichungsnummer: WO 2018/172254

(56) Entgegenhaltungen:
- EP-A2- 0 771 605
- EP-A2- 2 985 209
- DE-A1- 102008 033 113
- DE-A1- 102012 104 362
- DE-A1- 19 523 005
- JP-A- 2005 324 235

## Beschreibung

Die Erfindung betrifft ein Verfahren mit den Merkmalen des Oberbegriffs des Anspruchs 1.

Es gibt zahlreiche Anwendungsfälle, in denen mit ihren Flachseiten an-einander gehaltene Fügeflansche von Metallbauteilen an ihren Stößen - den parallel zueinander verlaufenden Stirnseiten der Fügeflansche - stirnseitig miteinander verschweißt werden. In vielen Fällen wird man hierfür ein Laserschweißen einsetzen. Die Fügeflansche der Fügepartner können der Längserstreckung der Stöße folgende aneinandergrenzende Endbereiche, beispielsweise von Blechwerkstücken oder eigens zum Ausbilden der Fügeflansche abgekantete oder gebördelte Bereiche eines solchen Werkstückes sein. Um die stirnseitige Verschweißung vornehmen zu können, sind die Fügeflansche in geeigneter Weise aneinander fixiert, etwa mittels einer geeigneten Spanneinrichtung, und zwar solange bis die Schweißung ausgeführt ist.

Aus DE 10 2013 107 228 B3 ist ein stirnseitiges Laserschweißen von Fügeflanschen zweier Fügepartner bekannt, wobei es sich bei den Füge-partnern um Stahlblechteile handelt. Bei dem aus diesem Dokument bekannt gewordenen Laserschweißverfahren ist vorgesehen, einen Zentralbereich der Schweißung mit einem geringeren Energieeintrag und die daran angrenzenden Randbereiche, die sich innerhalb der Stöße befinden, mit einem höheren Energieeintrag zu versorgen. Um über die gewünschte Stoßbreite die Schweißung vornehmen zu können, wird der Schweißlaserstrahl quer zur Vorschubrichtung oszillierend hin- und herbewegt. Bei diesem vorbekannten Verfahren wird diese Schweißlaserstrahlbewegung auch genutzt, um den über den Querschnitt der Schweißung erforderlichen unterschiedlichen Energieeintrag einzubringen, und zwar entweder dadurch, dass in den Randbereichen der Schweißung, in denen die Schweißung mit einem höheren Energieeintrag vorgenommen werden soll, die Verweildauer verlängert und/oder die Energie des Laserstrahls erhöht wird. Erreicht wird hiermit, dass die Schweißzone in diesen Bereichen relativ tief in die Stöße eingebracht werden kann.

Problematisch bei einem Schweißen von Stahlblechbauteilen, vor allem im Fahrzeugkarosseriebereich ist, dass die Blechbauteile mit einer Metallbeschichtung ausgerüstet sind. Hierbei kann es sich um eine korrosions-hemmende Beschichtung handeln, beispielsweise eine Zinkbeschichtung. Typischerweise ist eine solche Zinkbeschichtung als Feuerverzinkung oder elektrolytische Verzinkung ausgeführt. Problematisch bei dem Fügen derartiger Blechbauteile ist, dass der Schmelzpunkt und auch die Verdampfungstemperatur der metallischen Beschichtung signifikant niedriger ist als die Schmelztemperatur des Stahlwerkstoffes. Dieses hat zur Konsequenz, dass beim Schweißen von zwei Werkstücken, bei denen zumindest ein Fügepartner eine Metallbeschichtung mit einer Verdampfungstemperatur, die unterhalb der Schmelztemperatur des Stahlwerkstoffes liegt, wie dieses beispielsweise bei einer Zinkbeschichtung der Fall ist, das Beschichtungsmaterial in Folge des zum Schweißen notwendigen Wärmeeintrages spontan explosionsartig verdampft wird. Bei einer Zinkbeschichtung bezeichnet man dieses auch als Zinkentgasung. Die Folge sind eine verstärkte Spritzerbildung, womit auch Teile des erschmolzenen Schweißbades weggeführt werden und eine erhöhte Porosität in der Schweißnaht verursachen. Diese Porosität lässt sich dadurch erklären, dass das verdampfte Zink nicht ungehindert entgasen kann. Außerdem werden durch den Schweißprozess Eigenspannungen in der Schweißnaht hervorgerufen. In Kombination mit den gegebenen Diffusionsmöglichkeiten kann das verbleibende flüssig vorliegende Zink die Schweißnaht durch das sogenannte "Liquid Metal Embrittlement" (LME) verspröden. Insofern genügt eine solche Schweißnaht in aller Regel nicht den an das geschweißte Bauteil ansonsten gestellten Festigkeitsanforderungen, insbesondere wenn es sich um schwingende oder dynamische Beanspruchungen handelt, da durch die Werkstoffversprödung eine erhöhte Rissbildungsgefahr einhergeht.

Bei dem aus DE 10 2013 107 228 B3 bekannt gewordenen Schweißverfahren ist beim Schweißen von verzinkten Blechen ein Spaltmaß zwischen den Fügeflanschen der Fügepartner einzuhalten. Dieses Spaltmaß darf weder zu groß, noch zu gering sein. Um das Spaltmaß über die Länge der Stöße aufrechtzuerhalten, sind entsprechend hohe Anforderungen an die Einspanneinrichtung gestellt. Überdies ist bei diesem Verfahren unvermeidbar, dass ein Teil der Laserenergie verlorengeht, und zwar derjenige Anteil des Laserstrahls, der durch den Spalt zwischen den Fügepartnern hindurchgeht.

WO 2016/169791 A1 offenbart ein Verfahren, mit dem zwei derartige Fügepartner im Bereich ihrer Fügeflansche durch stirnseitiges Laserschweißen mit reduzierter Zinkentgasungsproblematik miteinander verschweißt werden können. Bei diesem vorbekannten Verfahren wird durch eine Laserstrahloszillation quer zur Vorschubrichtung in einer Frequenz zwischen 80 Hz und 1000 Hz das Schweißbad länger flüssig gehalten. Zudem wird durch die Laserstrahloszillation eine gewisse Dynamik in das Schweißbad eingebracht. Beide Maßnahmen unterstützen einen kontrollierten Entgasungsprozess durch das Schweißbad. Allerdings nimmt mit steigender Blechdicke auch die notwendige Schweißtiefe zu. Dadurch wird es gerade beim Vorliegen zweier zinkbeschichteter Fügepartner zunehmend schwieriger den Entgasungsprozess vollständig bzw. kontrolliert ablaufen zu lassen, da das Zink einen immer weiteren Weg bis an die Oberfläche zurückzulegen hat. Auch wenn mit diesem Verfahren Fügepartner stirnseitig lasergeschweißt werden können, von denen zumindest einer eine Beschichtung mit einer unterhalb der Schmelztemperatur des Stahlwerkstoffes liegenden Verdampfungstemperatur aufweist, ist insbesondere die Vorschubgeschwindigkeit durch die notwendige Laseroszillation quer zur Vorschubrichtung begrenzt. Entsprechend mehr Zeit muss für den Laserschweißvorgang in einer Serienfertigung bereitgestellt werden.

Aus EP 0 771 605 A2 ist ein Laserschweißverfahren für beschichtete Stahlbleche bekannt. Gemäß diesem Verfahren werden die Bleche vor dem Verschweißen im Nahtbereich unter einem spitzen Winkel aufeinanderstoßend angeordnet, und zwar derart, dass die Schweißnaht als Kehlnaht ausgebildet werden kann. Auf diese Weise wird ein zusätzlicher Entgasungsweg zwischen den beiden Fügepartnern bereitgestellt. Ein diesem Verfahren entsprechendes Verfahren ist auch aus DE 10kl 2008 033 113 A1 bekannt.

DE 10 2012 104 362 A1 offenbart ein Verfahren zum Steppnahtschweißen einer stirnseitigen Flanschverbindung. Um eine beim Fügen von beschichteten Stahlblechen eintretende Entgasung zu kontrollieren, wird gemäß diesem vorbekannten Verfahren die Schweißnaht nur als Steppschweißnaht ausgeführt.

In JP 2005 324235 A ist ein Schweißverfahren zum Laserschweißen von zwei beschichteten Stahlblechen beschrieben, wie diese vornehmlich zum Herstellen von Kraftstofftanks für Fahrzeuge verwendet werden. Mit dem aus diesem Stand der Technik bekannten Verfahren soll eine Porenbildung infolge des bereits bei einer unterhalb der Schmelztemperatur des Stahls liegenden Verdampfungstemperatur der Beschichtung vermieden werden. Dabei geht dieses vorbekannte Laserschweißverfahren von den Erkenntnissen aus, dass zur Vermeidung einer solchen Porenbildung die Fügeflansche der Fügepartner mit Abstand zueinander gehalten werden, um einen Entgasungsspalt bereitzustellen. Als Nachteil wird angegeben, dass für die Anordnung der Fügepartner Abstandsmittel eingesetzt werden, die mitunter nach dem Schweißen wieder entfernt werden müssen. Überdies wird die erforderliche Breite des Fügeflansches vorbekannter Verfahren kritisiert. Um ein solches Laserschweißverfahren zu verbessern, wird in diesem Stand der Technik vorgeschlagen, die Fügepartner so zueinander anzuordnen, dass ein sich in Richtung von der laserbeaufschlagten Stoßseite wegweisend öffnender Entgasungsspalt bereitgestellt ist. Dabei ist vorgesehen, dass die Stoßkanten der benachbarten Stöße mit Abstand zueinander angeordnet sind und sich somit der Entgasungsspalt ausgehend von dieser im Bereich der Stoßkanten befindlichen Spaltweite in Richtung des Wärmeeintrages vergrößert. Dabei kommt es beim Gegenstand dieses vorbekannten Verfahrens darauf an, dass die Abstände im Bereich der zueinander weisenden Stoßkanten und im Bereich des Endes der Fügeflansche sowie die Breite der Fügeflansche in einem ganz bestimmten geometrischen Verhältnis zueinander stehen. Um den Spalt zwischen den beiden zueinander weisenden Stoßkanten zu überbrücken, wird das in diesem Stand der Technik beschriebene Schweißverfahren mit zwei Lasern durchgeführt, von denen jeder mit seinem Laserstrahl auf eine Stoßkante gerichtet ist, sodass das aufgeschmolzene Metall den Spalt zwischen den beiden Stoßkanten füllt. Auch wenn mit diesem vorbekannten Verfahren zufriedenstellende Schweißergebnisse beschichteter Stahlblechteile bereitgestellt werden können, ist nach wie vor nicht unproblematisch, die beiden zueinander weisenden Stoßkanten in dem für das Laserschweißverfahren erforderlichen Abstand zu halten, insbesondere wenn längere Schweißnähte zu erstellen sind. Ebenfalls ist bei diesem Verfahren ein besonderes Augenmerk auf die Einhaltung der Vergrößerung des Abstandes der Fügeflansche zu achten, um das gewünschte Schweißergebnis zu erzielen. Gerade bei dünneren zuzufügenden Stahlblechteilen erfordert dieses höhere Anforderungen an die Maßhaltigkeit der Formung der Fügeflansche.

Ausgehend von dem eingangs diskutierten Stand der Technik liegt der Erfindung daher die Aufgabe zugrunde, ein Verfahren zum stirnseitigen Laserschweißen der Stöße von zwei aneinandergehaltenen Fügeflanschen zweier Fügepartner aus einem Stahlwerkstoff dergestalt weiterzubilden, dass die Schweißungen mit einem größeren Vorschub und effektiverer Beschichtungsentgasung unter Vermeidung von Porenbildung und LME und damit rascher als bei dem aus WO 2016/169791 A1 bekannten Verfahren durchgeführt werden können. Zudem sollen die zu JP 2005 324235 A aufgezeigten Nachteile vermieden werden.

Gelöst wird diese Aufgabe erfindungsgemäß durch ein eingangs genanntes, gattungsgemäßes Verfahren mit den Merkmalen des Anspruchs 1.

Der im Rahmen dieser Ausführungen benutzte Begriff "Fügeflansch" stellt denjenigen Randabschnitt eines Fügepartners dar, mit dem dieser mit dem Fügeflansch des anderen Fügepartners verbunden ist. Damit stellt derjenige Abschnitt eines Fügepartners seinen Fügeflansch dar, der, ausgehend von dem angrenzenden Stoß, der Eindringtiefe des durch die Schweißung aufgeschmolzenen Materials entspricht.

Bei diesem Verfahren werden die Fügepartner im Unterschied zu dem eingangs diskutierten Stand der Technik nicht mit ihren zueinander weisenden Seiten parallel, sondern einen Winkel einschließend zueinander gehalten. Der eingeschlossene Winkel öffnet sich in Richtung von der laserbeaufschlagten Stoßseite weg. In dieser Stellung der Fügeflansche zueinander wird die Laserschweißung durchgeführt. Aufgrund der winkligen Anstellung der Fügeflansche ist ein sich von dem Ort der aktuellen, in Richtung der Schweißnahttiefe fortschreitenden Aufschmelzung weg erstreckender und bzgl. seiner Weite sich vergrößernder Entgasungsspalt bereitgestellt. Durch diesen werden durch den Wärmeeintrag entstehende Verdampfungsprodukte des Beschichtungsmaterials abgeführt. Dieses bedeutet nicht, dass in Richtung zu der laserbeaufschlagten Seite keine Verdampfungsprodukte von dem Beschichtungsmaterial abgeführt werden, sondern dass die Verdampfungsprodukte jedenfalls zum größten Teil über den Entgasungsspalt kontrolliert weggeführt werden. Für die Abfuhr der Entgasungsprodukte ist durch die vorbeschriebene Geometrie des Entgasungsspaltes eine Wegsamkeit geschaffen, die den Verdampfungsprodukten einen geringeren Widerstand entgegenstellen, als ein Entgasen durch das Schweißbad hindurch. Daher werden die Verdampfungsprodukte durch den Entgasungsspalt, jedenfalls größtenteils, weggeführt, und zwar von der Fügezone weg. Bei dem erfindungsgemäßen Verfahren kann die gesamte Laserenergie in das aufzuschmelzende Material eingebracht werden.

Bei der vorbeschrieben winkligen Anordnung der zueinander weisenden Fügeflansche zum Ausbilden des Entgasungsspaltes ist im Unterschied zu der Lehre der JP 2005 324235 A vorgesehen , dass diese in ihrer Aneinanderhalten-Anordnung zum Durchführen des Fügeprozesses nur mit einem Linienkontakt oder quasi einem Linienkontakt aneinandergrenzen werden. Damit können Verdampfungsprodukte der Metallbeschichtung bereits beim Einsetzen des Schweißens über den Entgasungspalt abgeführt werden. Zugleich bildet der Linienkontakt und das entlang des Linienkontaktes entstehende Schweißbad eine wirksame Barriere für die Verdampfungsprodukte der Beschichtung. Durch den auf die aneinanderliegenden Stöße gerichteten Laserstrahl erfolgt aufgrund der geneigten Anordnung der zueinander weisenden Seiten der Fügeflansche eine Vorerwärmung der beschichteten Oberfläche in Richtung der Tiefe der sich ausbildenden Schweißnaht, nämlich durch den Laserstrahl und seine Reflexionen an den zueinander weisenden Seiten der Fügepartner sowie gegebenenfalls zusätzlich durch das sich in die Tiefe "einfressende" Schweißbad mit einer dieser vorlaufenden Wärmefront. Hierdurch werden die Fügeflansche und insbesondere die metallische Beschichtung erwärmt und sind auf die Verdampfungstemperatur der metallischen Beschichtung gebracht, bevor der Stahlwerkstoff diesen Bereich aufschmilzt.

Der durch das vorbeschriebene Aneinanderhalten der Fügeflansche gebildete Entgasungsspalt stellt die Wegsamkeit dar, über die die Entgasungsprodukte abgeführt werden, was aufgrund des beim Verdampfen entstehenden Drucks von selbst erfolgt. Bei dem erfindungsgemäßen Verfahren bleibt die Schmelze weitgehend frei von Verdampfungsprodukten, sodass die Schweißnaht extrem porenarm, wenn nicht gar als porenfrei anzusprechen ist. Demzufolge ist die Qualität der ausgebildeten Schweißnaht hervorragend und genügt dabei höchsten statischen Anforderungen auch unter schwingenden und dynamischen Beanspruchungen. Da bei diesem Verfahren das Entgasen der Metallbeschichtung nicht durch das Schweißbad hindurch erfolgt, braucht dieses zum Erzielen eines kontrollierten Entgasungsprozesses grundsätzlich nicht länger, als zum Aufschmelzen des Stahlmaterials erforderlich, flüssig gehalten zu werden. Infolge dessen kann der Laserstrahl bei diesem Verfahren mit entsprechend hoher Vorschubgeschwindigkeit bewegt werden. Untersuchungen haben gezeigt, dass dieses Verfahren mit Vorschubgeschwindigkeiten von mehr als 10 m/min durchgeführt werden kann.

Die winklige Anordnung der zueinander weisenden Seiten der Fügeflansche zum Ausbilden des Entgasungsspaltes kann durch die entsprechende Anordnung der Fügepartner bei gerade ausgeführten Fügeflanschen herbeigeführt werden. Möglich ist es auch, dass zumindest einer der beiden Fügepartner im Bereich seines Fügeflansches abgewinkelt oder gekrümmt ist und der die Krümmung abschließende Stoß derjenige ist, der an den Stoß des anderen Fügepartners für den Prozess des Laserschweißens aneinandergehalten wird. Vorteilhaft bei einer solchen Anordnung der Fügeflansche zueinander ist zudem, dass diese sich in der winkligen Anordnung mit einfachen Mitteln einspannen lassen. Diese brauchen im Unterschied zum Stand der Technik nicht über ihre parallelen aneinandergrenzenden Seiten verspannt zu werden. Vielmehr ist es möglich, einen der beiden Fügeflansche zu fixieren und den anderen zum Erstellen des gewünschten Linienkontaktes gegen diesen zu drücken, um etwaige Toleranzen ausgleichen zu können.

Vorteilhaft bei diesem Verfahren ist nicht nur die sich einstellende besondere Qualität der Schweißnaht trotz Schweißens von metallbeschichteten Fügepartnern und die mögliche hohe Schweißgeschwindigkeit, sondern auch, dass die Fügeflansche nur eine Breite aufzuweisen brauchen, die der Tiefe der Schweißnaht entspricht. Folglich können diese besonders schmal gehalten werden. Hierdurch kann das Gewicht des aus den Fügepartnern gebildeten Bauteils, beispielsweise eines Strukturbauteils für ein Fahrzeug reduziert werden. Zugleich wird der von einem solchen Bauteil benötigte Einbauraum reduziert, was gerade im Bereich kompaktbauender Kraftfahrzeuge ein nicht unerheblicher Vorteil ist. Aufgrund der geneigten Anordnung der Fügeflansche zueinander zur Ausbildung des Entgasungsspaltes können diese durch gekrümmte Bauteilausläufer gebildet werden, was wiederum den von dem Bauteil benötigten Bauraum reduziert.

Die vorbeschriebenen Vorteile einer Entgasung stellen sich bereits ein, wenn der von den Fügeflanschen eingefasste Winkel sehr klein ist, beispielsweise nur 1°, bevorzugt zwischen 6° und 8°, beträgt. Den Öffnungswinkel des Entgasungsspaltes wird man nicht zu groß wählen, damit eine Schweißnaht mit einer hinreichend tiefen Wurzel erzeugt werden kann. Daher werden typischerweise die Fügeflansche zur Ausbildung des Entgasungsspaltes nicht mit einem Winkel zueinander angeordnet, der 20° überschreitet, da sich bei größeren Winkeln die Festigkeit entsprechend reduziert.

Für die Durchführung des Laserschweißverfahrens ist es nicht erforderlich, dass die Materialstärke der Fügepartner ein gewisses Maß aufweisen muss. Vielmehr bestimmt sich dieses nach den ansonsten an das herzustellende Bauteil gestellten Anforderungen.

Bei dem erfindungsgemäßen Verfahren ist ferner vorgesehen, dass der Laserstrahl quer zur Vorschubrichtung geneigt auf die Fügezone der aneinandergehaltenen Stöße der beiden Fügeflanschen gerichtet ist, der Entgasungsprozess begünstigt werden kann. Als Grund hierfür werden die dann vermehrt eintretenden Reflexionen an den zueinander weisenden Oberflächen der Fügeflansche im Bereich des Entgasungsspaltes angesehen, was zu weniger Energieverlust führt und zu einer entsprechend intensiveren Vorerwärmung vor dem eigentlichen Aufschmelzen der metallbeschichteten Oberflächenbereiche. Daneben konnte beobachtet werden, dass bei einem angestellten Laser die Energie tiefer in das Material eingebracht werden kann, als dies ohne angestellten Laser der Fall ist. Es wird vermutet, dass die winklig zueinander angeordneten Fügeflansche in Kombination mit dem angestellten Laser zu einem verbesserten Reflexionsverhalten führen, wodurch es möglich ist, gegenüber herkömmlichen Verfahren bei gleicher Laserleistung Energie tiefer in das Material einbringen zu können. Dadurch bedingt wird es ermöglicht, dass sich die auszubildende Schweißnaht in die Fügeebene selbständig hineinzieht. Mit anderen Worten bildet sich im Wesentlichen, dem Konturverlauf der Fügepartner entsprechend, eine homogene Schweißnaht zwischen den beiden winklig zueinander angeordneten Fügepartnern aus. Der Winkel, mit dem der Laserstrahl quer zur Vorschubrichtung geneigt ist, sollte nicht mehr als 25° betragen. Bei einer stärkeren Neigung kann die Schweißnaht mitunter nicht mehr mit der notwendigen Tiefe bei gleichzeitig hohem Vorschub ausgebildet werden.

Aufgrund der Abfuhr der Verdampfungsprodukte der metallischen Beschichtung in Richtung von der laserbeaufschlagten Oberfläche weg, werden hierdurch auch die Laseroptik und andere benachbart angeordnete Geräte vor Schweißbadspritzern oder dergleichen geschützt. Dennoch kann es zweckmäßig sein, über die Fügezone somit den Schweißstrahl querend einen Luftstrom bereitzustellen, durch den unter Umständen an dieser Seite austretende Verdampfungsprodukte weggeblasen werden und somit der Laser und benachbarte Geräte vor Verschmutzungen geschützt sind.

Zusätzlich kann der Laserstrahl quer zu der der Längserstreckung der Stöße folgenden Vorschubrichtung oszillierend hin- und herbewegt werden, wie dieses in WO 2016/169791 A1 beschrieben ist. Das durch diese Maßnahme längere Flüssighalten des Schweißbades und die darin eingebrachte Schweißbaddynamik wirken sich positiv auf eine Vermeidung einer Porenausbildung innerhalb der Schweißnaht aus. Wird der Laserstrahl in Querrichtung zur Vorschubrichtung oszillierend geführt, können auch metallbeschichtete Stahlbauteile mit einem den Anforderungen entsprechenden Ergebnis gefügt werden, bei denen die metallische Beschichtung einen Schmelzpunkt hat, der oberhalb des Schmelzpunktes des Stahlwerkstoffes liegt. Durch das Oszillieren des Laserstrahls und die dadurch in das Schweißbad eingebrachte Schweißbaddynamik werden die aus einer solchen metallischen Beschichtung beim Prozess des Schweißens entstehende zusammenhängende Phasen zunächst zerstört und anschließend gleichmäßig, demnach fein dispers innerhalb der Schweißnaht verteilt. Typischerweise entspricht die Wegamplitude bei einer solchen oszillierenden Laserstrahlbewegung etwa zwei Drittel der durch die aneinandergehaltenen Stöße gebildeten Stoßflächenbreite.

Neben einer nicht stechenden, d.h. lotrechten Anordnung des Lasers in Vorschubrichtung, kann die Fügezone in Vorschubrichtung aber auch vorerwärmt werden, und zwar indem der Laserstrahl abweichend von der Lotrechten winklig, und zwar in Richtung der Vorschubrichtung geneigt auf die Fügezone gerichtet wird. Ein Neigungswinkel zwischen 5° und 45° gegenüber der Senkrechten auf die Fügezone wird in diesem Zusammenhang als zweckmäßig angesehen. Infolge der Winkelstellung ist der Laserstrahl stechend auf die Fügezone in Richtung der Vorschubrichtung gerichtet. Dann schiebt der Laserstrahl eine größere Wärmefront vor sich her, was insbesondere beim Fügen von metallbeschichteten Fügepartnern sinnvoll ist, deren Metallbeschichtung eine Verdampfungstemperatur aufweist, die unterhalb der Schmelztemperatur des Stahlwerkstoffes liegt. Dann verdampft die metallische Beschichtung auf der Stoßoberseite zumindest weitestgehend, bevor der Stahlwerkstoff aufgeschmolzen ist. Insgesamt wird dadurch ein Nahteinfall reduziert und die Qualität der Schweißnaht verbessert.

Nachfolgend ist die Erfindung anhand von Ausführungsbeispielen unter Bezugnahme auf die beigefügten Figuren beschrieben. Es zeigen:
- **Fig. 1a - 1c:**: Die Anordnung der Fügeflansche zweier Fügepartner zum stirnseitigen Laserschweißen (Figur 1a), zu Beginn des Schweißprozesses im Anfangsstadium der Ausbildung eines Schweißbades an einem Punkt der Fügezone (Figur 1b) und zu einem fortgeschrittenen Zeitpunkt der Schweißung (Figur 1c),
- **Fig. 2a - 2c:**: in einer vergrößerten Schnittdarstellung der in Figur 1 gezeigter Schweißvorgang vor dem Beginn des Aufschmelzens von Material (Figur 2a), im Anfangsstadium der Ausbildung des Schweißbades (Figur 2b) und nach Abschluss des Schweißvorganges (Figur 2c),

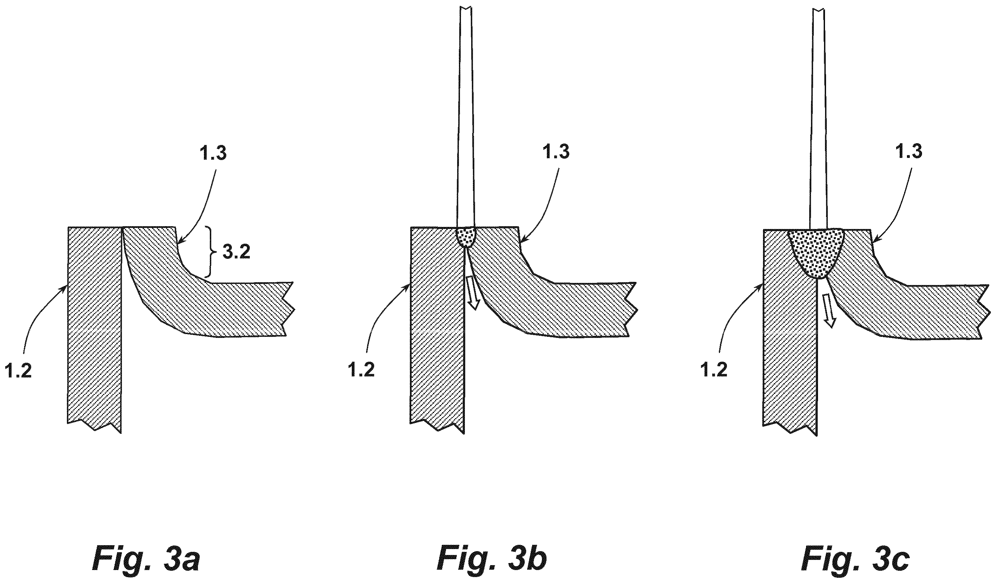

- **Fig. 3a - 3c:**: eine Darstellung einer Schweißung entsprechend derjenigen der Figurenfolge 1a - 1c mit geometrisch anders ausgelegten Fügepartnern und
- **Fig. 4:**: eine Darstellung eines Makroschliffes zweier Fügepartner, die entsprechend der Darstellung der Schweißung gemäß Figuren 3a - 3c gefügt worden sind.

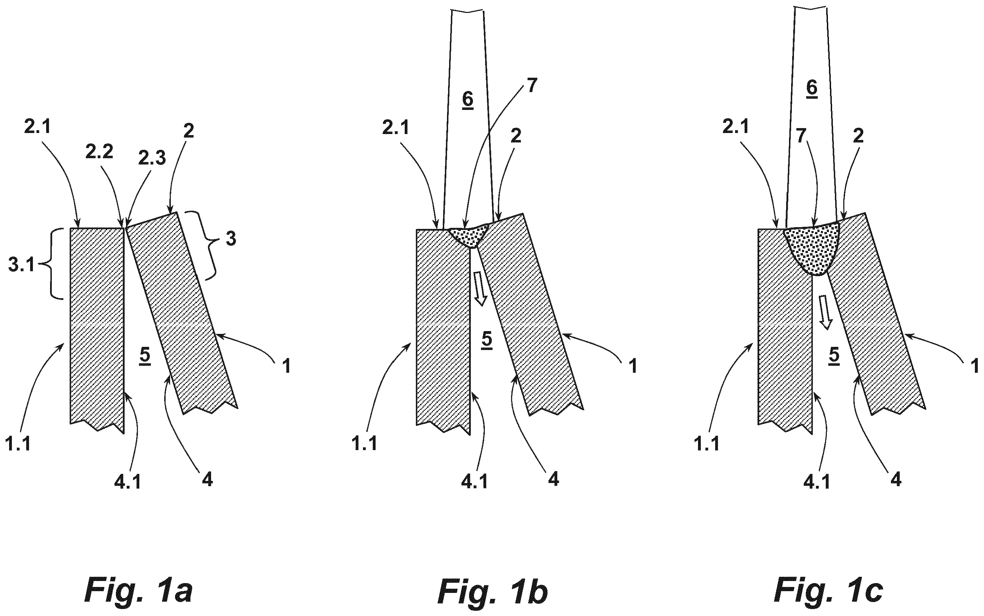

Figur 1a zeigt einen Randabschnitt von zwei im Übrigen nicht näher dargestellten Fügepartnern 1, 1.1. Bei den Fügepartnern 1, 1.1 handelt es sich um Stahlblechteile, wie diese zur Herstellung von Strukturbauteilen von Fahrzeugen verwendet werden. Die Fügepartner 1, 1.1 sind feuerverzinkt und tragen daher eine metallische Beschichtung, namentlich die Zinkbeschichtung. Die Fügepartner 1, 1.1 sind in der Figur 1a mit ihren Stößen 2, 2.1 der Längserstreckung des Bauteils folgend aneinander angrenzend gehalten. In der in Figur 1 gezeigten Stellung der beiden Fügepartner zueinander grenzen die zueinander weisenden Stoßkanten 2.2, 2.3 aneinander. Mithin stehen beide Fügepartner 1, 1.1 in einem Linienkontakt zueinander. Der in Figur 1a obere Abschnitt der dargestellten Teile der Fügepartner 1.1 bildet die Fügeflansche aus. Die Erstreckung der Fügeflansche 3, 3.1 ist in Figur 1a mit geschweiften Klammern kenntlich gemacht. Die beiden Fügepartner 1, 1.1 sind winklig mit einem Winkel von etwa 10° zueinander angeordnet, um den vorbeschriebenen Linienkontakt an den zueinander weisenden Stoßkanten zu ermöglichen. Diese Anordnung hat zur Folge, dass die zueinander weisenden Oberflächen 4, 4.1 der Fügepartner 1, 1.1 winklig zueinanderstehen und einen Spalt 5 einfassen. Die Spaltweite vergrößert sich ausgehend von den aneinander anliegend gehaltenen Stoßkanten 2.2, 2.3 in Richtung von den Stößen 2, 2.1 weg.

In der in Figur 1a gezeigten Anordnung der beiden Fügepartner 1, 1.1 zueinander werden diese für die Erstellung einer stirnseitigen Schweißung zum Fügen der beiden Fügepartner 1, 1.1 in einer in den Figuren nicht dargestellten Spannvorrichtung gehalten. Vorzugsweise sind die Fügepartner 1, 1.1 so zueinander gehalten, dass die aneinander anliegenden Stoßkanten 2.2, 2.3 unter einer gewissen Vorspannung stehen.

Zum Fügen der beiden Fügepartner 1, 1.1 miteinander wird ein Laserstrahl 6 auf die Stöße 2, 2.1 gerichtet (s. Figur 1b). Der Laserstrahl 6 ist defokussiert. Denkbar ist an dieser Stelle aber auch, dass der Laser fokussiert ist. Der Durchmesser des Laserspots ist in der Darstellung der Figur 1b erkennbar. Aufgrund des Wärmeeintrages auf die beiden Stöße 2, 2.1 verdampft die auf den Stößen 2, 2.1 befindliche Zinkbeschichtung, bevor der Stahlwerkstoff beginnt aufzuschmelzen. Gleiches gilt an dieser Stelle auch für den Fall, dass sich lediglich auf den zueinander weisenden Seiten 4, 4.1 der Fügepartner 1, 1.1 eine Zinkbeschichtung befindet und diese auf den Stirnseiten der Stöße 2, 2.1 beispielsweise durch einen vorangegangenen Bearbeitungsschritt, z.B. ein Beschnitt der Fügepartner, nicht mehr vorhanden ist. Das Schweißbad ist darin mit dem Bezugszeichen 7 kenntlich gemacht. Aufgrund der Laserstrahleinwirkung und dem damit bedingten anhaltenden Wärmeeintrag frisst sich das Schweißbad 7 ausgehend von den Stößen 2, 2.1 in die Fügepartner 1, 1.1 selbstständig hinein, d.h. es sucht sich selbst einen Weg. Der Ausdehnung des Schweißbades 7 in die Tiefe vorauseilend bildet sich eine Wärmefront, die an den zueinander weisenden Seiten der Fügepartner 1, 1.1 die Zinkbeschichtung erwärmt. Da die Verdampfungstemperatur der Zinkbeschichtung unterhalb der Schmelztemperatur des Stahlwerkstoffes liegt, hat die Zinkbeschichtung zu verdampfen angefangen oder dieser Vorgang ist bereits ganz oder teilweise abgeschlossen, bevor der Stahlwerkstoff schmilzt. Infolge des Spaltes 5, der im Rahmen dieser Ausführungen auch als Entgasungsspalt angesprochen ist, werden die Verdampfungsprodukte der Zinkbeschichtung, den Weg mit dem geringsten Widerstand folgend, abgeführt. Dieses ist der Weg durch den Entgasungsspalt 5 von dem Schweißbad 7 weggerichtet, wie dieses in Figur 1b durch einen Blockpfeil angedeutet ist. Aufgrund der Abfuhr der Verdampfungsprodukte in dieselbe Richtung, in der sich die Schweißzone in die Tiefe der Schweißnaht hin ausbreitet, frisst sich diese quasi wie von selbst in die Tiefe. Bei diesem Verfahren braucht die Ausbildung der Schweißnaht in die Tiefe somit nicht gegen das Entgegenströmen von Verdampfungsprodukten der Metallbeschichtung zu arbeiten.

Figur 1c zeigt die Fügezone nach weitgehend abgeschlossener Schweißung. Erkennbar ist das Schweißbad 7 bereits hinreichend tief in die Fügepartner 1, 1.1 eingedrungen. Die auf den zueinander weisenden Seiten 4, 4.1 der Fügepartner 1, 1.1 befindliche Zinkbeschichtung verdampft weiterhin von dem Schweißbad 7 weggerichtet durch den Entgasungsspalt 5.

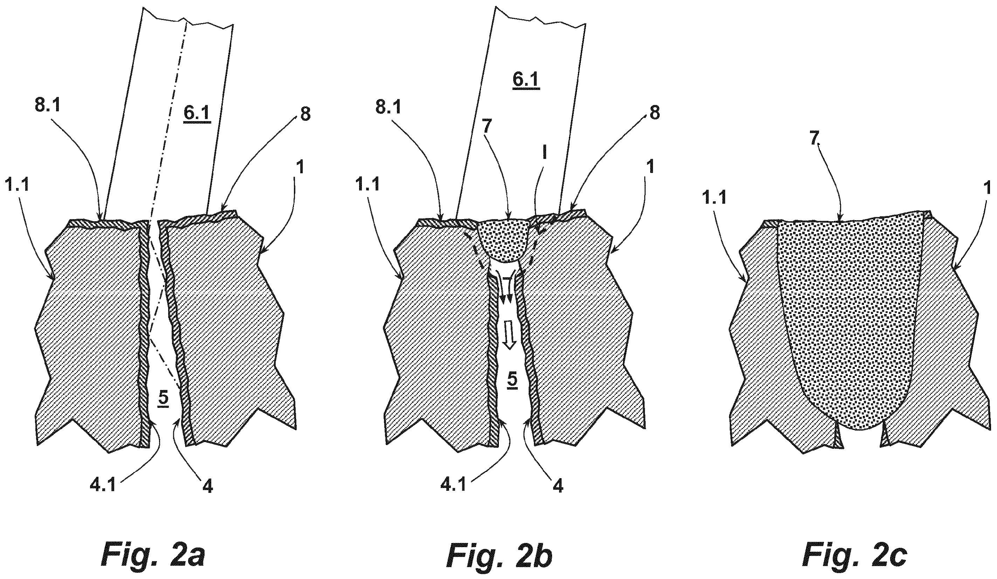

Die Figurenfolge 2a bis 2c verdeutlicht das vorbeschriebene Verfahren nochmals anhand von einer vergrößerten Ausschnittsdarstellung aus dem Bereich der aneinandergrenzenden Stoßkanten 2.2, 2.3 der beiden Fügepartner 1, 1.1. Im Unterschied zu dem zu den Figuren 1a bis 1c beschriebenen Fügeverfahren wird entsprechend der Erfindung bei dem Ausführungsbeispiel der Figuren 2a bis 2c der Laserstrahl 6.1 quer zu seiner Vorschubrichtung geneigt auf die beiden Stöße 2, 2.1 gerichtet. Obwohl die beiden Fügepartner 1, 1.1, wie vorstehend beschrieben, im Bereich der zueinander weisenden Stoßkanten 2.2, 2.3 aneinander liegen, existieren aufgrund von unvermeidbaren Materialunregelmäßigkeiten zwischen den beiden Fügepartnern 1, 1.1 tatsächlich kleine Schlitzabschnitte. Dieses bedingt, dass durch diese Öffnungen, wie in Figur 2a gezeigt, Laserstrahlanteile hindurchtreten und an den zueinander weisenden Oberflächen 4, 4.1 innerhalb des Entgasungsspaltes 5 reflektiert werden. Durch dieses Eindringen von Laserstrahlen an die Oberflächen 4, 4.1, was durch den geneigten Laserstrahl 6.1 begünstigt wird, wird die Zinkbeschichtung 8, 8.1 an den zueinander weisenden Oberflächen der Fügepartner 1, 1.1 erwärmt. Das Durchtreten von Laserstrahlen durch die nicht vermeidbaren verbleibenden Spalte endet, wenn, wie in Figur 2b gezeigt, sich im Bereich der aneinander liegenden Stoßkanten 2.2, 2.3 das Material beginnt aufzuschmelzen und sich ein Schweißbad 7 ausbildet. Durch die Vorerwärmung und durch die sich um das Schweißbad 7 erstreckende Wärmefront ist die Zinkbeschichtung 8, 8.1 in unmittelbarer Nähe zu dem Schweißbad 7 bereits aufgeschmolzen und in aller Regel entweder bereits vollständig oder zumindest weitestgehend verdampft, bevor das Schweißbad in diesen Bereichen mit dem Stahlwerkstoff aufgeschmolzen hat. Dies gilt erst recht für den Fall, dass sich die Zinkbeschichtung 8, 8.1 nicht oder nur teilweise im Bereich der zueinander weisenden Stoßkanten 2.2, 2.3 der Fügepartner 1, 1.1 und damit hauptsächlich auf den zueinander weisenden Oberflächen 4, 4.1 der Fügepartner 1, 1.1, erstreckt. Dies kann beispielsweise aus vorgeschalteten Beschnittvorgängen der entsprechenden Fügepartner 1, 1.1 an ihren Stirnseiten resultieren. In Figur 2b ist gestrichelt eine Isotherme I gezeigt, die die Verdampfungstemperatur der Zinkbeschichtung 8, 8.1 zeigt. Die Temperatur des Schweißbades 7 liegt oberhalb der Temperatur der gezeigten Isothermen **I,** die dem Einfressen des Schweißbades 7 in die Tiefe hin vorauseilt. Dementsprechend ist, der Ausbreitung des Schmelzbades 7 vorauseilend, die Zinkbeschichtung 8, 8.1 zumindest teilweise verdampft, bevor diese Teile des Stahlwerkstoffes aufschmelzen. Durch die durch den Entgasungsspalt 5 geschaffene Wegsamkeit werden die Verdampfungsprodukte von dem Schweißbad 7 weggeführt, wie dieses schematisiert in der Figur 2b gezeigt ist.

Figur 2c zeigt die fertig ausgebildete Schweißnaht. Die in die Fügepartner 1, 1.1 in Figur 2c gezeigte Tiefe der Schweißnaht stellt zugleich die Breite der Fügeflansche 3, 3.1 als Teil der Fügepartner 1, 1.1 dar.

Die Figurenfolge 3a bis 3c zeigt schematisiert das Fügen zweier weiterer Fügepartner 1.2, 1.3. Während bei dem Ausführungsbeispiel der Figurenfolge 1a bis 1c die Fügepartner 1, 1.1 beide eben und winklig zueinander angeordnet waren, ist bei den Fügepartner 1.2, 1.3 der Fügepartner 1.3 im Bereich seines Fügeflansches 3.2 gekrümmt ausgeführt. Bei diesem Ausführungsbeispiel wird der Entgasungsspalt durch die gekrümmte Ausbildung des Fügeflansches 3.2 des Fügepartners 1.3 bereitgestellt, indem an dessen Krümmungsende ein Linienkontakt zwischen den Fügepartnern ausgebildet ist. Vorstellbar ist an dieser Stelle aber auch, dass beide Fügepartner gekrümmt ausgebildet sind und jeweils am entsprechenden äußeren Radius- bzw. Krümmungsende mittels Linienkontakt gegenüberliegend aneinandergehalten werden. Der Schweißvorgang wird ebenso durchgeführt, wie dieses zu der Figurenfolge 1a bis 1c bzw. 2a bis 2c beschrieben ist.

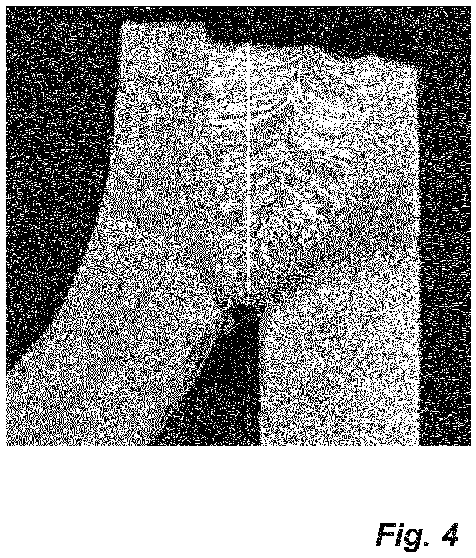

Figur 4 zeigt eine Darstellung eines Makroschliffes einer Schweißnaht, die entsprechend dem zu den vorstehenden Figuren erläuterten Schweißverfahren hergestellt worden ist. Die Darstellung zeigt, dass das aufgeschmolzene Material eine Idealform aufweist und dass dieses porenfrei ist.

Zur Untersuchung der Belastbarkeit derartiger Schweißnähte ist ein Stoßfänger aus zwei miteinander stirnseitig verschweißten zinkbeschichteten Stahlblechbauteilen hergestellt worden. Bei dem einen Bauteil handelt es sich um ein im Querschnitt hutprofilförmiges Profil, dessen offene Seite durch eine Stahlplatte geschlossen worden ist. Beide Bauteile sind stirnseitig, wie dieses zu den vorstehenden Figuren beschrieben ist, miteinander verschweißt worden. Die Stärke der eingesetzten Stahlblechbauteile betrug 2 mm. Die Schweißtiefe zwischen 2,5 mm und 3 mm. Die mit diesem Bauteil durchgeführten Falluntersuchungen mit Fallhöhen von 3 m und Fallmassen von über 500 kg konnten nicht zu einer Zerstörung der Schweißnähte führen. In allen durchgeführten Versuchen versagte an einigen Stellen das eingesetzte Grundmaterial, nicht jedoch die Schweißnaht. Dieses Ergebnis war überraschend, da ansonsten bei derartigen Bauteilen, insbesondere bei dynamischer Belastung, in aller Regel die Schweißnaht die jeweilige Schwachzone darstellt.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die Erfindung umsetzen zu können.

### Bezugszeichenliste

- 1, 1.1, 1.2, 1.3: Fügepartner
- 2, 2.1: Stoß
- 2.2, 2.3: Stoßkante
- 3, 3.1, 3.2: Fügeflansch
- 4, 4.1: Oberfläche
- 5: Spalt/Entgasungsspalt
- 6, 6.1: Laserstrahl
- 7: Schweißbad
- 8, 8.1: Zinkbeschichtung
- I: Isotherme

## Patentansprüche

1. Verfahren zum stirnseitigen Laserschweißen der Stöße (2, 2.1) von zwei aneinandergehaltenen Fügeflanschen (3, 3.1, 3.2) zweier Fügepartner (1, 1.1, 1.2, 1.3) aus einem Stahlwerkstoff, von denen zumindest einer mit einer metallischen Beschichtung mit einer unterhalb der Schmelztemperatur des Stahlwerkstoffes liegenden Verdampfungstemperatur ausgerüstet ist, wobei die Fügeflansche (3, 3.1, 3.2) der beiden Fügepartner (1, 1.1, 1.2, 1.3) für den Prozess des Laserschweißens im Bereich ihrer zueinander weisenden Kanten (2.2, 2.3) in einem Linienkontakt und einen sich in Richtung von der laserbeaufschlagten Seite wegweisend öffnenden Winkel einschließend aneinander gehalten werden, wodurch zwischen den Fügeflanschen (3, 3.1, 3.2) ein sich in Richtung des Wärmeeintrages vergrößernder Entgasungsspalt (5) bereitgestellt wird, durch den durch den Wärmeeintrag entstehende Verdampfungsprodukte des Beschichtungsmaterials (8, 8.1) abgeführt werden, **dadurch gekennzeichnet, dass** der Laserstrahl (6.1) quer zur Vorschubrichtung geneigt auf die aufzuschmelzende Fügezone der aneinandergehaltenen Fügeflansche (3, 3.1, 3.2) gerichtet ist, so dass durch Reflexionen des Laserstrahls (6.1) an den zueinander weisenden Seiten der Fügepartner (1, 1.1, 1.2, 1.3) eine Vorerwärmung vor dem eigentlichen Aufschmelzen der metallbeschichteten Oberflächenbereiche erfolgt.

2. Verfahren nach Anspruch 1 , **dadurch gekennzeichnet, dass** die Fügeflansche (3, 3.1, 3.2) in einem Winkel zwischen 1° und 20° geneigt zueinander gehalten werden.

3. Verfahren nach einem der Ansprüche 1 oder 2, **dadurch gekennzeichnet, dass** der auf die Fügeflansche (3, 3.1, 3.2) auftreffende Laserspot mit einem Durchmesser eingestellt wird, der größer als die maximale Spaltweite zwischen den aneinandergehaltenen Fügeflanschen (3, 3.1, 3.2) im Bereich der Stöße (2, 2.1) ist, von welcher maximalen Spaltweite sich der Entgasungsspalt (5) hinsichtlich seiner Weite vergrößert.

4. Verfahren nach einem der Ansprüche 1 bis 3, **dadurch gekennzeichnet, dass** der Laserstrahl (6.1) quer zur Vorschubrichtung mit einem Neigungswinkel von nicht mehr als 25 Grad geneigt auf die Fügezone der Stöße (2, 2.1) gerichtet wird.

5. Verfahren nach einem der Ansprüche 1 bis 4, **dadurch gekennzeichnet, dass** auf der laserstrahlbeaufschlagten Stoßseite ein quer zur Laserstrahlrichtung strömender und durch den Laserstrahl geführter Luftstrom bereitgestellt wird.

6. Verfahren nach einem der Ansprüche 1 bis 5, **dadurch gekennzeichnet, dass** der Laserstrahl quer zu der der Längserstreckung der Stöße (2, 2.1) folgenden Vorschubrichtung oszillierend hin- und herbewegt wird.

7. Verfahren nach Anspruch 6, **dadurch gekennzeichnet, dass** die Oszillationsfrequenz des Laserstrahls 1000 Hz nicht überschreitet.

8. Verfahren nach Anspruch 6 oder 7, **dadurch gekennzeichnet, dass** die Wegamplitude der Oszillationsbewegung des Laserstrahls zwei Drittel der durch die aneinandergehaltenen Stöße (2, 2.1) gebildeten Stoßflächenbreite nicht überschreitet.

9. Verfahren nach einem der Ansprüche 1 bis 8, **dadurch gekennzeichnet, dass** die zum Aufschmelzen vorgesehene Fügezone der Stöße (2, 2.1) in Vorschubrichtung vor dem Aufschmelzen graduell vorerwärmt wird.

10. Verfahren nach Anspruch 9, **dadurch gekennzeichnet, dass** der Laserstrahl in einem Winkel zwischen 5° und 45° gegenüber der Senkrechten stechend auf die Fügezone gerichtet wird.

11. Verfahren nach einem der Ansprüche 1 bis 10, **dadurch gekennzeichnet, dass** die Metallbeschichtung des zumindest einen Fügepartners eine Zinkbeschichtung (8, 8.1) ist.

12. Verfahren nach einem der Ansprüche 1 bis 11, **dadurch gekennzeichnet, dass** die Breite der aufzuschmelzenden Fügezone kleiner ist als die durch die aneinander gehaltenen Stöße (2, 2.1) gebildete Flächenbreite und der Laserstrahl (6.1) derart geführt wird, dass an beiden Stößen (2, 2.1) ein äußerer Randbereich zum Ausbilden jeweils einer Schweißbadstütze nicht aufgeschmolzen wird.

## Claims

1. A method for laser welding end faces of the joints (2, 2.1) of two joining flanges (3, 3.1, 3.2) of two joining partners (1, 1.1, 1.2, 1.3) made of a steel material and held together, at least one of which is provided with a metallic coating having an evaporation temperature below the melting temperature of the steel material, wherein the joining flanges (3, 3.1, 3.2) of the two joining partners (1, 1.1, 1.2, 1.3) are held together in line contact and enclosing an angle opening towards the laser-subjected side for the laser welding process in the region of their mutually facing edges (2.2, 2.3), whereby a degassing gap (5) between the joining flanges (3, 3.1, 3.2) which increases in the direction of heat input, is provided, by which evaporation products of the coating material (8, 8.1) resulting from the heat input are removed, **characterized in that** the laser beam (6.1) is directed inclined transversely to the feed direction towards the joining zone to be melted of the joining flanges (3, 3.1, 3.2) held together, so that preheating occurs before the actual melting of the metal-coated surface regions by reflections of the laser beam (6.1) on the mutually facing sides of the joining partners (1, 1.1, 1.2, 1.3).

2. The method according to claim 1, **characterized in that** the joining flanges (3, 3.1, 3.2) are held inclined to each other at an angle between 1° and 20°.

3. The method according to any one of claims 1 or 2, **characterized in that** the laser spot hitting the joining flanges (3, 3.1, 3.2) is set with a diameter that is larger than the maximum gap width between the joining flanges (3, 3.1, 3.2) held together in the region of the joints (2, 2.1), from which maximum gap width the degassing gap (5) increases with respect to its width.

4. The method according to any one of claims 1 to 3, **characterized in that** the laser beam (6.1) is directed at the joining zone of the joints (2, 2.1) at an angle of inclination of no more than 25 degrees transverse to the feed direction.

5. The method according to any one of claims 1 to 4, **characterized in that** an airflow flowing transversely to the laser beam direction and guided through the laser beam is provided on the joint side subjected to the laser beam.

6. The method according to any one of claims 1 to 5, **characterized in that** the laser beam is moved back and forth in an oscillating manner transverse to the feed direction following the longitudinal extension of the joints (2, 2.1).

7. The method according to claim 6, **characterized in that** the oscillation frequency of the laser beam does not exceed 1000 Hz.

8. The method according to claim 6 or 7, **characterized in that** the excursion amplitude of the oscillation movement of the laser beam does not exceed two thirds of the joint surface width formed by the joints (2, 2.1) held together.

9. The method according to any one of claims 1 to 8, **characterized in that** the joining zone of the joints (2, 2.1) intended for melting is gradually preheated in the feed direction before melting.

10. The method according to claim 9, **characterized in that** the laser beam is directed at the joining zone at an angle between 5° and 45° relative to the vertical.

11. The method according to any one of claims 1 to 10, **characterized in that** the metal coating of the at least one joining partner is a zinc coating (8, 8.1).

12. The method according to any one of claims 1 to 11, **characterized in that** the width of the joining zone to be melted is smaller than the surface width formed by the joints (2, 2.1) held together and the laser beam (6.1) is guided in such a way that an outer edge region is not melted at both joints (2, 2.1) to form a weld pool support.

## Revendications

1. Procédé de soudage laser côté frontal des joints (2, 2.1) de deux brides d'assemblage (3, 3.1, 3.2) maintenues l'une contre l'autre de deux pièces à assembler (1, 1.1, 1.2, 1.3) constituées d'un matériau en acier, dont au moins l'une est pourvue d'un revêtement métallique présentant une température d'évaporation inférieure à la température de fusion du matériau en acier, dans lequel les brides d'assemblage (3, 3.1, 3.2) des deux pièces à assembler (1, 1.1, 1.2, 1.3) sont maintenues l'une contre l'autre pour le procédé de soudage laser au niveau de leurs arêtes se faisant face (2.2, 2.3) en contact linéaire et formant un angle s'ouvrant dans la direction s'éloignant du côté exposé au laser, de sorte qu'un espace de dégazage (5), s'élargissant dans la direction de l'apport thermique, est créé entre les brides d'assemblage (3, 3.1, 3.2), espace par lequel les produits de vaporisation du matériau de revêtement (8, 8.1) générés par l'apport thermique sont évacués, **caractérisé en ce que** le faisceau laser (6.1) est orienté transversalement à la direction d'avance vers la zone d'assemblage à faire fondre des brides d'assemblage maintenues l'une contre l'autre (3, 3.1, 3.2), de sorte que, par les réflexions du faisceau laser (6.1) sur les faces se faisant face des pièces à assembler (1, 1.1, 1.2, 1.3), un préchauffage des zones de surface métalliquement revêtues s'effectue avant la fusion proprement dite.

2. Procédé selon la revendication 1, **caractérisé en ce que** les brides d'assemblage (3, 3.1, 3.2) sont maintenues inclinées l'une par rapport à l'autre à un angle compris entre 1° et 20°.

3. Procédé selon l'une des revendications 1 ou 2, **caractérisé en ce que** le point laser frappant les brides d'assemblage (3, 3.1, 3.2) est réglé avec un diamètre supérieur à la largeur d'écart maximale entre les brides d'assemblage (3, 3.1, 3.2) maintenues l'une contre l'autre dans la zone des joints (2, 2.1), à partir de laquelle la largeur d'écart maximale de l'espace de dégazage (5) augmente par rapport à sa largeur.

4. Procédé selon l'une des revendications 1 à 3, **caractérisé en ce que** le faisceau laser (6.1) est dirigé transversalement à la direction d'alimentation vers la zone d'assemblage des joints (2, 2.1) avec un angle d'inclinaison ne dépassant pas 25 degrés.

5. Procédé selon l'une des revendications 1 à 4, **caractérisé en ce qu'**un flux d'air s'écoulant transversalement à la direction du faisceau laser et guidé à travers celui-ci est prévu du côté du joint exposé au faisceau laser.

6. Procédé selon l'une des revendications 1 à 5, **caractérisé en ce que** le faisceau laser est déplacé d'avant en arrière de manière oscillante transversalement à la direction d'alimentation suivant l'extension longitudinale des joints (2, 2.1).

7. Procédé selon la revendication 6, **caractérisé en ce que** la fréquence d'oscillation du faisceau laser ne dépasse pas 1000 Hz.

8. Procédé selon la revendication 6 ou 7, **caractérisé en ce que** l'amplitude du trajet du mouvement d'oscillation du faisceau laser ne dépasse pas deux tiers de la largeur de surface d'impact formée par les joints (2, 2.1) maintenus l'un contre l'autre.

9. Procédé selon l'une des revendications 1 à 8, **caractérisé en ce que** la zone d'assemblage des joints (2, 2.1) prévus pour la fusion est progressivement préchauffée dans le sens d'alimentation avant la fusion.

10. Procédé selon la revendication 9, **caractérisé en ce que** le faisceau laser est dirigé vers la zone d'assemblage à un angle compris entre 5° et 45° par rapport à la verticale.

11. Procédé selon l'une des revendications 1 à 10, **caractérisé en ce que** le revêtement métallique de l'au moins un partenaire d'assemblage est un revêtement de zinc (8, 8.1).

12. Procédé selon l'une des revendications 1 à 11, **caractérisé en ce que** la largeur de la zone d'assemblage à fondre est inférieure à la largeur de surface formée par les joints (2, 2.1) maintenus l'un contre l'autre et le faisceau laser (6.1) est guidé de sorte qu'une région de bord extérieure n'est pas fondue aux deux joints (2, 2.1) pour former un support de bain de soudure.
